# EUROPEAN PATENT SPECIFICATION

(11) **EP 0 517 321 B1**
(45) Date of publication and mention of the grant of the patent: **06.10.1999**
(21) Application number: 92201574.8
(22) Date of filing: 02.06.1992
(51) Int. Cl.: H04M 19/00

(54) **Telecommunication system comprising a supply circuit for a telecommunication line, and a supply circuit for a telecommunication line suitable for use in the telecommunication system**
Telekommunikationssystem mit einer Speiseschaltung für eine Telekommunikationsleitung sowie Speiseschaltung für eine Telekommunikationsleitung zum Gebrauch in dem Telekommunikationssystem
Installation de télécommunication avec un circuit d'alimentation pour une ligne de télécommunication, et circuit d'alimentation pour ligne pour utilisation dans une installation de télécommunication

(30) Priority: 06.06.1991 EP 91201396
(43) Date of publication of application: 09.12.1992
(73) Proprietor: Koninklijke Philips Electronics N.V., 5621 BA Eindhoven (NL)
(72) Inventor: Rademaker, Gerrit, NL-5656 AA Eindhoven (NL); Westdorp, Rob, NL-5656 AA Eindhoven (NL); Grutter, Hendrikus Johannes, NL-5656 AA Eindhoven (NL)
(74) Representative: Bakker, Hendrik

(56) References cited:
- CA-A- 1 233 283
- DE-A- 3 237 681
- IEEE JOURNAL OF SOLID-STATE CIRCUITS vol. SC-16, no. 4, August 1981, pages 270 - 278 W.D.PACE 'A Monolithic Telephone Subscriber Loop Interface Circuit'
- PATENT ABSTRACTS OF JAPAN vol. 013, no. 539 (E-853)30 November 1989 & JP-A-1 220 954 ( NEC CORP. ) 4 September 1989
- PATENT ABSTRACTS OF JAPAN vol. 9, no. 305 (E-363)(2028) 3 December 1985 & JP-A-60 143 095 ( FUJITSU K.K. ) 29 July 1985
- PATENT ABSTRACTS OF JAPAN vol. 11, no. 61 (E-483)(2508) 25 February 1987 & JP-A-61 220 556 ( TAMURA ELECTRIC WORKS LTD ) 30 September 1986

## Description

The invention relates to a telecommunication system comprising a supply circuit for a two-wire telecommunication line, the supply circuit comprising a circuit section coupled between a first fixed voltage reference point related to a system power supply, and the first wire , and the supply circuit comprising a current source coupled between the second wire and a second fixed voltage reference point related to the system power supply, the circuit section comprising a transistor coupled with a first main electrode to the first wire , coupled with a second main electrode to the first fixed voltage reference point and coupled with a control electrode to one of the fixed voltage reference points and, by way of a capacitor, to the first wire.

A telecommunication system of this type is known from the Japanese Patent Application 61-220556.

Such a telephone exchange is connected to users by means of telecommunication lines comprising each a first and a second wire. During a user's conversation the associated telecommunication line is to be fed with DC current. This used to be effected by way of large coupled coils. At present these coils have been replaced by an electronic supply circuit. Such a supply circuit comprises a circuit section coupled between a first reference point (usually earth) and the first wire of the line. The supply circuit further includes a current source coupled between the second wire of the line and a second reference point (usually 48 volts). The circuit section comprises a transistor having a very high control input impedance, such as a MOSFET (for example of the N-channel type), although a double bipolar Darlington combination could be used as well. The first main electrode of the MOSFET, the source, is usually coupled to the first wire by way of a source resistor, whereas the second main electrode, the drain, is connected to the first reference point. The control electrode, the gate, is coupled to the first wire by way of a capacitor and usually coupled to the first reference point by way of a gate resistor. The current source generally comprises a bipolar transistor (for example, of the n-p-n type), whose emitter and base are coupled to the second reference point by way of an emitter resistor and a zener diode respectively, and whose collector is connected to the second wire. The base is further coupled to the first reference point by way of a series combination of a base resistor and a switch.

When a conversation is to take place, the switch is closed and a DC current starts flowing through the current source. This DC current may be adjusted to 30 mA DC by means of a specific selection of the components of the current source and is to be supplied to the current source by the circuit section. This takes place through both wires which are mutually coupled with a DC current impedance of about 600 Ohms and are thus supplied with DC current. Since the capacitor is discharged the moment the switch closes, the MOSFET is not conductive and in the first instance only a current much smaller than the adjusted 30 mA DC current will flow from the first reference point, through the gate resistor, the capacitor, the two wires, the bipolar transistor and the emitter resistor to the second reference point. Since in the first instance the current source cannot pass the adjusted 30 mA DC current, the voltage across the current source obtains a very low value and the voltage available in the two wires (the line voltage) in the first instance ends up in the neighbourhood of the potential at the second reference point (-48 volts). The capacitor is slowly charged with this small current until the voltage across the capacitor has increased sufficiently for rendering the MOSFET conductive. Because the main current path of the MOSFET is capable of passing the adjusted 30 mA DC current, the voltage across the current source will rise and the line voltage will be increased to a value situated between the potentials available at the reference points. The final value thus reached by the line voltage lies in the neighbourhood of the potential available at the first reference point.

Such a prior-art supply circuit is to meet strict requirements as to symmetry and demodulation as is any telecommunication line supply circuit. The strict symmetry requirements are posed to avoid low-frequency common mode disturbance signals becoming audible in the case of insufficient symmetry. The strict demodulation requirements are posed to avoid a high-frequency modulated common mode disturbance signal becoming demodulated as a result of a non-linear signal processing and thus becoming audible in the case of insufficient symmetry. In the case of sufficient symmetry both requirements are met. The described supply circuit will meet these requirements if the impedance of the series combination of gate resistor and capacitor located between the first reference point and the first wire is made sufficiently large. In that case there is the disadvantage of the time constant formed by the combination of gate resistor and capacitor increasing likewise, so that the supply circuit exhibits a slower adjustment behaviour. This is undesired.

The Japanese Patent Application No. 61-220556, Appln No. 60-60797, discloses a system as of the preamble of claim 1. For trying to achieve symmetry, the Japanese patent application proposes to apply a low-Ohmic control of both the upper and lower line of the two-wire telecommunication line using a transformer with a center tap and two capacitors. Herewith any difference in impedance of the circuits 1 and 2 of the Japanese application would not be of importance anymore for the symmetry property of the line because these circuits have a relatively high impedance as compared to the low-Ohmic control via low-Ohmic impedances. In practice, however, capacitors have considerable tolerances so that the theoretically achievable symmetry will not be obtained at reasonable costs. The same is true for a transformer having a centre tap. In practice it will be difficult to get a perfect transformer. As has been discussed above, symmetry requirements are very strict.

It is an object of the invention to provide a telecommunication system of the type mentioned in the opening paragraph, in which the supply circuit meets the strict requirements as to symmetry and demodulation and, besides, adjusts itself sufficiently fast.

For this purpose the telecommunication system according to the invention is characterized in that the circuit section comprises a voltage threshold circuit arranged for conducting in a first direction at the occurrence of a first threshold voltage for rendering the transistor conductive, which voltage threshold circuit is located between the control electrode and the first fixed voltage reference point.

By including between the first reference point and the gate resistor, which is further connected to the gate of the MOSFET, a voltage threshold circuit, such as for example a diode, the capacitor is capable of being charged sufficiently fast via the gate resistor until the voltage across the capacitor has reached a value at which the MOSFET becomes conductive. At that moment the total current flowing through the diode, which is equal to the sum of the leakage current of the capacitor and the gate current, is so small as to have the impedance of the diode increase strongly. As a result, the impedance of the series-arranged diode, gate resistor and capacitor has become sufficiently large, so that the requirements as to symmetry can be met without the value of the gate resistor being increased and without the adjustment speed of the supply circuit being affected. The use of such a diode is additionally advantageous in that the voltage on the gate of the MOSFET may increase to a value situated above the potential available at the first reference point (earth). This will likewise increase the voltage on the source of the MOSFET and increases the voltage available to the line.

In a first embodiment the telecommunication system according to the invention is characterized, in that the voltage threshold circuit is further arranged for being conductive in a second direction if a second threshold voltage is available.

If such a voltage threshold circuit is used, such as for example a zener diode or an antiparallel circuit constituted by one diode and two or more series-arranged diodes, it is likewise possible for a current to flow in the opposite direction, to drain for example a high-voltage pulse on the line to earth, or to discharge the capacitor, which may sometimes be desirable. Even when such a zener diode is used, the voltage on the gate of the MOSFET may increase to a value situated above the potential available at the first reference point (earth), so that the voltage available for the line is increased.

In a second embodiment the telecommunication system according to the invention is characterized, in that the supply circuit comprises a voltage adjusting circuit for adjusting a telecommunication line voltage to a predetermined value situated between the potentials available at the reference points, which voltage adjusting circuit is coupled to the control electrode and to at least one of the wires.

When the line voltage is adjusted to a predetermined value by a voltage adjusting circuit, which value lies between potentials available at the reference points, the final value reached by the line voltage is no longer defined. If the voltage adjusting circuit adjusts this value, for example, to midway between the two potentials (-24 volts), the range for a voltage excursion in a positive sense (in the direction of the circuit) is about equal to the range for a voltage excursion in a negative sense (in the direction of the current source). This maximum voltage excursion range in either direction (in either direction about 20 volts, depending on the length of the line) is favourable because a high-frequency modulated common mode disturbance signal on the line does not become audible until its amplitude is smaller than the range for this voltage excursion. Non-linear signal processing and thus demodulation does not take place until the amplitude exceeds the voltage excursion range and the high-frequency disturbance signal on the line is processed non-linearly, for example, by one of the transistors.

In a third embodiment the telecommunication system according to the invention is characterized, in that the voltage adjusting circuit comprises a voltage divider coupled between the two reference points, an output of which voltage divider being coupled to a side of the voltage threshold circuit and coupled to at least either wire by way of a high-ohmic resistor, the value of which high-ohmic resistor exceeding the characteristic impedance of the telecommunication line, the side being coupled to the one reference point by way of a further resistor.

This is a simple embodiment of the voltage adjusting circuit. It comprises a voltage divider coupled between the two reference points, an output of which being coupled to a side of the zener diode and coupled to at least one of the wires by way of a high-ohmic resistor whose value exceeds the characteristic impedance of the line (600 Ohms). This high-ohmic resistor is to have a large value so as to avoid that the overall impedance of the line starts to deviate too much from the characteristic impedance. Furthermore, the side of the zener diode is coupled to the first reference point by way of a further resistor, so that a feedback between the voltage adjusting circuit and the circuit section is realised. In practice the coupling between the output of the voltage divider, the zener diode and the wires is realised by way of a bipolar transistor. Its collector is then connected to the anode of the zener diode and to the further resistor, its base is coupled to the first wire *vi*a a first high-ohmic resistor and to the second wire *via* a second high-ohmic resistor and its emitter is connected to the output of the voltage divider. Needless to observe that this coupling may also be established by means of a more complex differential circuit.

The operation of the voltage adjusting circuit is as follows. By realising the voltage divider with two series-connected identical resistors, the voltage at the output is situated midway between the two potentials (-24 volts) at the reference points. As long as the line voltage (the average of the voltages on the wires) has about the same value, the voltage adjusting circuit is in a state of rest. If the line voltage increases, so does the base voltage of the bipolar transistor by way of the high-ohmic resistors, so that the current through this transistor increases and the collector voltage decreases. Consequently, the line voltage drops across the zener diode and the capacitor until the line voltage is situated midway between the two potentials and the voltage adjusting circuit regains its state of rest. If the line voltage drops, so does the current flowing through the transistor whereas the collector voltage rises. As a result, the line voltage rises until it is again midway between the two potentials and the voltage adjusting circuit regains its state of rest.

In a fourth embodiment the telecommunication system according to the invention is characterized, in that the high-ohmic resistor is coupled to the first of the reference points by way of a smoothing capacitor.

By connecting the high-ohmic resistors to the first of the reference points by way of a smoothing capacitor, common mode voltages available on the line are smoothed, with the exception of very low frequency common mode voltages having a frequency below 300 HZ which, however, in telecommunication circuits falls short of the audible frequency band (300-3400 Hz). If the common mode voltages having a frequency exceeding 300 Hz were not smoothed, they would appear on the base of the transistor of the voltage adjusting circuit and thus appear amplified and inverted on the collector of the transistor, so that the impedance of the gate resistor would apparently be reduced and thus the impedance of the supply circuit would apparently be reduced which is undesirable for frequencies exceeding 300 Hz.

The invention further relates to a supply circuit for a two-wire telecommunication line suitable for use in a telecommunication system of the type mentioned in the opening paragraph, this supply circuit comprising a circuit section coupled to a first reference point and capable of being coupled to a first wire and the supply circuit comprising a current source coupled to a second reference point and capable of being coupled to a second wire, this circuit section comprising a transistor a first main electrode of which can be coupled to the first wire, a second main electrode of which is coupled to the first reference point and a control electrode of which can be coupled to the first wire by way of capacitor and is coupled to one of the reference points.

It is a further object of the invention to provide a supply circuit to be used in a telecommunication system of the type mentioned in the opening paragraph, which supply circuit meets the strict symmetry and demodulation requirements and, an addition, is adjusted sufficiently fast.

For this purpose the supply circuit according to the invention is characterized in that the circuit section comprises a voltage threshold circuit arranged for conducting in a first direction when a first threshold voltage occurs for rendering a transistor conductive, which voltage threshold circuit is located between the control electrode and the one reference point.

In a first embodiment the supply circuit according to the invention is characterized, in that the voltage threshold circuit is further arranged for conducting in a second direction when a second threshold voltage occurs.

In a second embodiment the supply circuit according to the invention is characterized, in that the supply circuit comprises a voltage adjusting circuit for adjusting a telecommunication line voltage to a predetermined value situated between potentials available at the reference points, this voltage adjusting circuit being coupled to the control electrode and capable of being coupled to at least either wire.

In a third embodiment the supply circuit according to the invention is characterized, in that the voltage adjusting circuit comprises a voltage divider located between the two reference points, an output of which voltage divider being coupled to a side of the voltage threshold circuit and capable of being coupled to at least either wire by way of a high-ohmic resistor, the value of which high-ohmic resistor exceeding the characteristic impedance of the telecommunication line, the side being coupled to the one reference point by way of a further resistor.

In a fourth embodiment the supply circuit according to the invention is characterized, in that the high-ohmic resistor is coupled to one of the reference points by way of a smoothing capacitor.

The invention will be further explained with reference to an exemplary embodiment represented in the drawing Figure, in which:

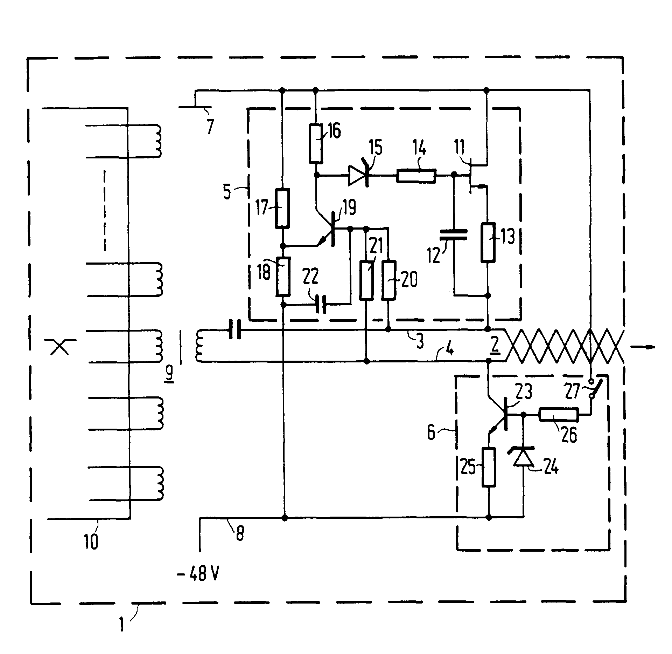

Fig. 1 shows a telecommunication system according to the invention comprising a supply circuit for a telecommunication line.

The telecommunication system 1 represented in Fig. 1 comprises a supply circuit for a telecommunication line 2 which has a first wire 3 and a second wire 4, these wires 3, 4 being intertwisted. The supply circuit is formed by a circuit section 5 and a current source 6. The circuit section 5 is coupled between the first wire 3 and a first reference point 7 which corresponds to earth. The current source 6 is coupled between the second wire 4 and a second reference point 8 which corresponds to -48 volts. One side of the line 2 is connectable to a subscriber arrangement (not shown), the other side being capacitively coupled to a secondary winding of transformer 9. The primary winding of this transformer 9 is connected to a coupling field 10 which is capable of interconnecting various subscribers or capable of connecting them to an external line.

The circuit section 5 comprises an N-channel MOSFET transistor 11 whose drain is connected to the first reference point 7 that corresponds to earth. The source of MOSFET transistor 11 is coupled to the first wire 3 by way of a source resistor 13 and the gate is coupled to the first wire 3 by way of a capacitor 12 and coupled to reference point 7 corresponding to earth by way of a series combination of a gate resistor 14, a voltage threshold circuit formed by a zener diode 15 and a further resistor 16. In addition, the circuit section 5 comprises a voltage adjusting circuit formed by a voltage divider constituted by two series-arranged resistors 17,18, two high-ohmic resistors 20,21, a bipolar transistor 19 and a smoothing capacitor 22. The two series-arranged resistors 17,18 are coupled between the first reference point 7 corresponding to earth and the second reference point 8 corresponding to -48 volts. An output of this voltage divider is connected to the emitter of transistor 19. The base of this transistor is coupled to the first wire 3 by way of high-ohmic resistor 20, coupled to the second wire by way of the high-ohmic resistor 21 and coupled to the second reference point corresponding to -48 volts by way of the smoothing capacitor 22. The collector of this transistor is connected to a junction located between a zener diode 15 and a further resistor 16. The two high-ohmic resistors 20,21 have a value exceeding that of the characteristic impedance of the telecommunication line 2, which characteristic impedance is about 600 Ohms.

The current source 6 comprises a bipolar transistor 23 whose collector is connected to the second wire 4. By way of an emitter resistor 25 the emitter of transistor 23 is coupled to the second reference point 8 corresponding to -48 volts and the base is coupled to the second reference point 8 by way of a zener diode 24 and to the first reference point 7 corresponding to earth by way of a series combination of a base resistor 26 and a switch 27. The switch 27 is controlled by the coupling field and closed during a telephone conversation taking place over the telecommunication line 2.

The operation of the supply circuit of the telecommunication system 1 represented in Fig. 1 is as follows. When a conversation is to take place, switch 27 is closed under the influence of the coupling field 10, and a current starts flowing from earth, through base resistor 26, base-emitter junction of transistor 23 and *via* emitter resistor 25 to -48 volts. Because capacitor 12 is discharged in the first instance, MOSFET 11 is not conductive and no more than a small current of the order of the charging current through capacitor 12 will flow through the collector emitter junction of transistor 23. This current is considerably smaller than the current that was to flow through the collector emitter junction of transistor 23 and the emitter resistor 25 on the basis of the resistance of emitter resistor 25 and the breakdown voltage of zener diode 24. The current expected to flow through emitter resistor 25 is not obtained by supplying a large base current either, because the base current is limited by the relatively high resistance of base resistor 26. Because the current flowing through emitter resistor 25 does not reach the expected value, the voltage through emitter resistor 25 is smaller than expected and the voltage across zener diode 24 is smaller than the breakdown voltage. This remains the case as long as the voltage across the charging capacitor 12 is too small to render MOSFET 11 conductive and because no more than the charging current of capacitor 12 flows through the collector emitter junction of transistor 23. The voltage on line 2 is very near to -48 volts during the period of time in which MOSFET 11 is not conductive.

In this manner, capacitor 12 is charged *via* further resistor 16, zener diode 15, gate resistor 14 and current source 6. Once the voltage across capacitor 12 has reached a sufficient value, MOSFET 11 is rendered conductive and a current starts flowing from earth through the drain source junction of MOSFET 11, through source resistor 13, through the collector emitter junction of transistor 23 and through emitter resistor 25 to -48 volts. The current source 6 is dimensioned so that the final value of this current is about 30 mA, the voltage across zener diode 24 then being approximately equal to the breakdown voltage of this zener diode 24.

The voltage on line 2 then rises to a value defined by the voltage adjusting circuit. The voltage at the output of the voltage divider, formed by the two series-arranged resistors 17,18, is about 24 volts. This voltage is also available on the emitter of transistor 19. A substantially equal voltage occurs on the base of transistor 19 and also on the wires 3,4 *via* the high-ohmic resistors 20,21.

If the voltage on line 2 increased or decreased due to a disturbance signal, the voltage on the base of transistor 19 will increase or decrease and the current through further resistor 16 will likewise increase or decrease. As a result, the voltage at the junction between further resistor 16 and zener diode 15 will increase or decrease and the voltage on line 2 will decrease or increase *via* zener diode 15, gate resistor 14 and capacitor 12. In this manner a feedback is realised, so that the voltage on the line is adjusted to about -24 volts after a disturbance. Smoothing capacitor 22 filters any common mode disturbing voltages available on the line, because otherwise they would be amplified by means of transistor 19 and end up in an inverted version on its collector where they could lead to an apparent impedance reduction of the gate resistor 14. This filtering is effected for common mode disturbing signals having a frequency exceeding 300 Hz, because an apparent impedance reduction caused by disturbing signals with a lower frequency entails few disadvantages.

The supply circuit according to the invention meets the strict requirements of symmetry posed to such a supply circuit, due to the presence of the zener diode 15. Without the presence of zener diode 15 the resistive/capacitive impedance formed by the series combination of the further resistor 16, gate resistor 14 and capacitor 12 should be compensated by a resistive/inductive impedance between the wire 4 and point 8 (-48 volts). By means of the zener diode 15 added to the series combination the impedance of this series combination is enlarged to such an extent that compensation is no longer necessary. This can be explained as follows. When the voltage across capacitor 12 has attained a value at which MOSFET 11 becomes conductive, no more than a small leakage current flows through capacitor 12. From then on the total current flowing through the zener diode is equal to the sum of this leakage current and the gate current through MOSFET 11 and thus so small as to render the impedance of the zener diode 15 very large. Consequently, the impedance of the whole series combination is also very large and compensation is no longer necessary.

*In lieu of* MOSFET 11, also a bipolar transistor could be used whose base current is of the same order of magnitude as the leakage current of capacitor 12. A bipolar transistor having such a small base current could be realised, for example, by means of a double Darlington configuration. The use of a single Darlington configuration having too large a base current causes too large a current to flow through zener diode 15 when the capacitor 12 is fully charged, so that this diode gets too small an impedance and the symmetry requirements are no longer satisfied.

*In lieu of* zener diode 15, also an ordinary diode could be used, whose anode is to be connected to further resistor 16 and whose cathode is to be connected to gate resistor 14. However, a disadvantage then occurs which will be discussed hereinafter. It is possible indeed, without creating any further disadvantages, to substitute an antiparallel combination of one diode or two or more series-arranged diodes for zener diode 15, while the anode of the single diode is then to be connected to the further resistor 16 and the cathode to gate resistor 14. The two or more series-arranged diodes in this case determine the breakdown voltage of the zener diode realised in this fashion.

The voltage adjusting circuit constituted by the resistors 17,18, the bipolar transistor 19, the high-ohmic resistors 20,21 and the smoothing capacitor 22 may naturally be realised in different fashions too, for example, by means of a more complex differential circuit. As long as the coupling to the wires 3,4 is effected *via* the high-ohmic resistors 20,21, the value of which being for example at least 100 times greater than the characteristic impedance of the line 2, the supply circuit does not disturb the characteristic impedance of the line. The voltage adjusting circuit adjusts the value of the line voltage midway between the two potentials (-24 volts), so that the voltage excursion range in a positive sense (in the direction of the circuit 5) becomes about equal to the voltage excursion range in a negative sense (in both directions of the current source). This maximum voltage excursion range in the two directions (about 20 volts in one direction) is favourable because a high-frequency modulated common mode disturbance signal on line 2 does not become audible as long as its amplitude is smaller than this voltage excursion range. Non-linear signal processing and thus demodulation is not effected until the amplitude exceeds the voltage excursion range and the high-frequency disturbance signal on the line 2 is processed non-linearly by, for example, one of the transistors. By means of the voltage adjusting circuit the supply circuit satisfies the demodulation requirements posed on such a supply circuit.

Above disadvantage which occur if the zener diode 15 is replaced by an ordinary diode becomes clearly apparent when the voltage adjusting circuit is used. If the voltage on line 2 (the average of the voltages on the wires 3,4) rises due to a disturbance signal, the voltage on the cathode of the diode will rise *via* the capacitor 12. At the same time the voltage on the base of bipolar transistor 19 will rise and so will the main current flowing through this transistor 19 and hence the current flowing through further resistor 16, which leads to a reduction of the voltage on the anode of the diode. The diode is then rendered non-conductive when the line voltage rises, which detrimentally affects the control process. If the zener diode 15 is used, this is obviously not the case.

The use of zener diode 15 is furthermore advantageous in that the gate of MOSFET 11 may be further controlled even up to a voltage value exceeding the potential at point 7 (earth). Consequently, the voltage loss across the gate-source junction and the source resistor 13 is compensated and in this manner there is a voltage excursion range in a positive sense (in the direction of circuit 5) which benefits satisfying the demodulation requirements. Naturally, the same holds for zener diode 15 being replaced by an ordinary diode.

The breakdown voltage (20 volts) of zener diode 15 is preferably selected somewhat smaller than half the minimum voltage difference between the two reference points 7,8 (42 volts). If the breakdown voltage were selected greater than this, worst case situations would be possible in which the control process would be detrimentally affected by the too large breakdown voltage. With a much smaller selected breakdown voltage, common mode disturbing signals having a relatively small amplitude and being available on the line 2 are demodulated already by the non-linear signal processing of the zener diode 15, which is undesired.

## Claims

1. Telecommunication system (1) comprising a supply circuit for a two-wire telecommunication line (3,4), the supply circuit comprising a circuit section (5) coupled between a first fixed voltage reference point (7) related to a system power supply, and the first wire (3), and the supply circuit comprising a current source (6) coupled between the second wire (4) and a second fixed voltage reference point (8) related to the system power supply, the circuit section (5) comprising a transistor (11) coupled with a first main electrode to the first wire (3), coupled with a second main electrode to the first fixed voltage reference point (7) and coupled with a control electrode to one of the fixed voltage reference points (7,8) and, by way of a capacitor (12), to the first wire (3), characterized in that the circuit section (5) comprises a voltage threshold circuit (15) arranged for conducting in a first direction at the occurrence of a first threshold voltage for rendering the transistor (11) conductive, which voltage threshold circuit (15) is located between the control electrode and the first fixed voltage reference point (7).

2. Telecommunication system (1) as claimed in Claim 1, characterized in that the voltage threshold circuit (15) is further arranged for being conductive in a second direction if a second threshold voltage is available.

3. Telecommunication system (1) as claimed in Claim 2, characterized in that the supply circuit comprises a voltage adjusting circuit (17,18,19,20,21,22) for adjusting a telecommunication line voltage to a predetermined value situated between the potentials available at the reference points, which voltage adjusting circuit is coupled to the control electrode and to at least one of the wires (3,4).

4. Telecommunication system (1) as claimed in Claim 3, characterized in that the voltage adjusting circuit comprises a voltage divider (17,18) coupled between the two fixed voltage reference points (7,8), an output of which voltage divider (17,18) being coupled to a side of the voltage threshold circuit (15) and coupled to at least either wire by way of a high-ohmic resistor (20,21), the value of which high-ohmic resistor exceeding the characteristic impedance of the telecommunication line, the side being coupled to the first fixed voltage reference point (7) by way of a further resistor.

5. Telecommunication system (1) as claimed in Claim 4, characterized in that the high-ohmic resistor is coupled to one of the reference points by way of a smoothing capacitor (22).

6. Supply circuit for a two-wire telecommunication line (3,4), the supply circuit comprising a circuit section (5) coupled between a first fixed voltage reference point (7) related to a system power supply, and a terminal for connection of the first wire (3), and the supply circuit comprising a current source (6) coupled between a terminal for connection of the second wire (4) and a second fixed voltage reference point (8) related to the system power supply, the circuit section (5) comprising a transistor (11) coupled with a first main electrode to the terminal for connection of the first wire (3), coupled with a second main electrode to the first fixed voltage reference point (7) and coupled with a control electrode to one of the fixed voltage reference points (7,8) and, by way of a capacitor (12), to the terminal for connection of the first wire (3), characterized in that the circuit section (5) comprises a voltage threshold circuit (15) arranged for conducting in a first direction at the occurrence of a first threshold voltage for rendering the transistor (11) conductive, which voltage threshold circuit (15) is located between the control electrode and the first fixed voltage reference point (7).

7. Supply circuit as claimed in Claim 6, characterized in that the voltage threshold circuit is further arranged for conducting in a second direction when a second threshold voltage occurs.

8. Supply circuit as claimed in Claim 7, characterized in that the supply circuit comprises a voltage adjusting circuit (17, ·····,22) for adjusting voltages at terminals for connection of a telecommunication line to a predetermined value situated between the voltage at the first fixed voltage reference point (7) ,8), and the voltage at the second fixed voltage reference point, this voltage adjusting circuit being coupled to the control electrode and capable of being coupled to at least either wire.

9. Supply circuit as claimed in Claim 8, characterized in that the voltage adjusting circuit comprises a voltage divider (17,18) located between the first fixed voltage reference point and the second fixed voltage reference point, an output of which voltage divider being coupled to a side of the voltage threshold circuit and capable of being coupled to at least either wire by way of a high-ohmic resistor (20,21) , the value of which high-ohmic resistor exceeding the characteristic impedance of the telecommunication line, the side being coupled to the first fixed voltage reference point (7) by way of a further resistor (16).

10. Supply circuit as claimed in Claim 9, characterized in that the high-ohmic resistor is coupled to the first fixed voltage reference point or to the second fixed voltage reference point by way of a smoothing capacitor.

## Patentansprüche

1. Telekommunikationssystem (1) mit einer Speiseschaltung für eine doppeladrige Telekommunikationsleitung (3, 4), wobei die Speiseschaltung einen Schaltungsteil (5) aufweist, der zwischen einem ersten einer Systemspeiseschaltung zugeordneten Festspannungsbezugspunkt (7) und dem ersten Draht (3) vorgesehen ist, und wobei die Speiseschaltung eine Stromquelle (6) aufweist, die zwischen dem zweiten Draht (4) und einem zweiten der Systemspeiseschaltung zugeordneten Festspannungsbezugspunkt (8) vorgesehen ist, wobei der Schaltungsteil (5) einen Transistor (11) aufweist, von dem eine erste Hauptelektrode mit dem ersten Draht (3) gekoppelt ist, von dem eine zweite Hauptelektrode mit dem ersten Festspannungsbezugspunkt (7) gekoppelt ist und von dem eine Steuerelektrode mit einem der Festspannungsbezugspunkte (7, 8), sowie mittels eines Kondensators (12) mit dem ersten Draht (3) gekoppelt ist, dadurch gekennzeichnet, dass der Schaltungsteil (5) eine Spannungsschwellenschaltung (15) aufweist, dazu vorgesehen, um beim Auftritt einer ersten Schwellenspannung in einer ersten Richtung leitend zu sein und den Transistor (11) in den leitenden Zustand zu bringen, wobei diese Spannungsschwellenschaltung (15) zwischen der Steuerelektrode und dem ersten Festspannungsbezugspunkt (7) liegt.

2. Telekommunikationssystem (1) nach Anspruch 1, dadurch gekennzeichnet, dass die Spannungsschwellenschaltung (15) weiterhin derart vorgesehen ist, dass diese in einer zweiten Richtung leitend ist, wenn eine zweite Schwellenspannung verfügbar ist.

3. Telekommunikationssystem (1) nach Anspruch 2, dadurch gekennzeichnet, dass die Speiseschaltung eine Spannungseinstellschaltung (17, 18, 19, 20, 21, 22) aufweist zum Einstellen einer Telekommunikationsleitungsspannung auf einen vorbestimmten Wert zwischen den an den Bezugspunkten verfügbaren Potentialen, wobei diese Spannungseinstellschaltung mit der Steuerelektrode sowie mit wenigstens einem der Drähte (3, 4) gekoppelt ist.

4. Telekommunikationssystem (1) nach Anspruch 3, dadurch gekennzeichnet, dass die Spannungseinstellschaltung einen zwischen den beiden Bezugspunkten (7, 8) vorgesehenen Spannungsteiler (17, 18) aufweist, wobei ein Ausgang dieses Spannungsteilers (17, 18) mit einer Seite der Spannungsschwellenschaltung (15) sowie mittels eines hochohmigen Widerstandes (20, 21) mit wenigstens einem der beiden Drähte gekoppelt ist, wobei der Wert des hochohmigen Widerstandes die charakteristische Impedanz der Telekommunikationsleitung übersteigt, wobei die genannte Seite mittels eines weiteren Widerstandes mit dem ersten Festspannungsbezugspunkt (7) gekoppelt ist.

5. Telekommunikationssystem (1) nach Anspruch 4, dadurch gekennzeichnet, dass der hochohmige Widerstand mittels eine Glättungskondensators (22) mit einem der Bezugspunkte gekoppelt ist.

6. Speiseschaltung für eine doppeladrige Telekommunikationsleitung (3, 4) wobei die Speiseschaltung einen Schaltungsteil (5) aufweist, der zwischen einem ersten, einer Systemspeiseschaltung zugeordneten festen Spannungsbezugspunkt (7) und einem Anschluss zur Verbindung des ersten Drahtes (3) vorgesehen ist und wobei die Speiseschaltung eine Stromquelle (6) aufweist, die zwischen einem Anschluss zur Verbindung des zweiten Drahtes (4) und einem zweiten, der Systemspeiseschaltung zugeordneten festen Spannungsbezugspunkt gekoppelt ist, wobei der Schaltungsteil (5) einen Transistor (11) aufweist, dessen erste Hauptelektrode mit dem Anschluss zur Verbindung des ersten Drahtes (3) verbunden ist, dessen zweite Hauptelektrode mit dem ersten festen Spannungsbezugspunkt (7) gekoppelt ist und dessen Steuerelektrode mit einem der festen Bezugspunkten (7,8) gekoppelt ist und mittels eines Kondensators (12) mit dem Anschluss zur Verbindung des ersten Drahtes (3), dadurch gekennzeichnet, dass der Schaltungsteil (5) eine Spannungsschwellenschaltung (15) aufweist, die beim Auftritt einer ersten Schwellenspannung in einer ersten Richtung leitend ist um den Transistor (11) leitend zu machen, wobei diese Spannungsschwellenschaltung (15) zwischen der Steuerelektrode und dem festen Spannungsbezugspunkt (7) vorgesehen ist.

7. Speiseschaltung nach Anspruch 6, dadurch gekennzeichnet, dass die Spannungsschwellenschaltung weiterhin beim Auftritt einer zweiten Schwellenspannung in einer zweiten Richtung leiten soll.

8. Speiseschaltung nach Anspruch 7, dadurch gekennzeichnet, dass die Speiseschaltung eine Spannungseinstellschaltung (17,...,22) aufweist zum Einstellen von Spannungen an Anschlüssen zur Verbindung einer Telekommunikationsleitung mit einem vorbestimmten Wert zwischen der Spannung an dem ersten festen Spannungsbezugspunkt (7, 8) und der Spannung an dem zweiten festen Spannungsbezugspunkt, wobei diese Spannungseinstellschaltung mit der Steuerelektrode gekoppelt ist und mit wenigstens einem der Drähte verbunden werden kann.

9. Speiseschaltung nach Anspruch 8, dadurch gekennzeichnet, dass die Spannungseinstellschaltung einen Spannungsteiler (17, 18) zwischen dem ersten festen Spannungsbezugspunkt und dem zweiten festen Spannungsbezugspunkt aufweist, wobei ein Ausgang des Spannungsteilers mit einer Seite der Spannungsschwellenschaltung gekoppelt ist und mittels eines hochohmigen Widerstandes (20,21) mit wenigstens einem der beiden Drähte gekoppelt werden kann, wobei der Wert dieses hochohmigen Widerstandes die charakteristische Impedanz der Telekommunikationsleitung übersteigt, wobei diese Seite mittels eines weiteren Widerstandes (16) mit dem ersten Spannungsbezugspunkt (7) gekoppelt ist.

10. Speiseschaltung nach Anspruch 9, dadurch gekennzeichnet, dass der hochohmige Widerstand mittels eines Glättungskondensators mit dem ersten festen Spannungsbezugspunkt oder mit dem zweiten festen Spannungsbezugspunkt gekoppelt ist.

## Revendications

1. Système de télécommunications (1) comprenant un circuit d'alimentation pour une ligne de télécommunications à deux fils (3, 4), le circuit d'alimentation comprenant une section de circuit (5) couplée entre un premier point de référence de tension fixe (7) relié à une alimentation de système et le premier fil (3), et le circuit d'alimentation comprenant une source de courant (6) couplée entre le deuxième fil (4) et un deuxième point de référence de tension fixe (8) relié à l'alimentation de système, la section de circuit (5) comprenant un transistor (11) couplé avec une première électrode principale au premier fil (3), couplé avec une deuxième électrode principale au premier point de référence de tension fixe (7) et couplé avec une électrode de commande à un des points de référence de tension fixe (7, 8) et, au moyen d'un condensateur (12), au premier fil (3), caractérisé en ce que la section de circuit (5) comprend un circuit de tension de seuil (15) agencé pour être conducteur dans une première direction lors de l'apparition d'une première tension de seuil pour rendre le transistor (11) conducteur, lequel circuit de tension de seuil (15) se trouve entre l'électrode de commande et le premier point de référence de tension fixe (7).

2. Système de télécommunications (1) suivant la revendication 1, caractérisé en ce que le circuit de tension de seuil (15) est en outre agencé pour être conducteur dans une deuxième direction si une deuxième tension de seuil est disponible.

3. Système de télécommunications (1) suivant la revendication 2, caractérisé en ce que le circuit d'alimentation comprend un circuit de réglage de tension (17, 18, 19, 20, 21, 22) pour régler une tension de ligne de télécommunications à une valeur prédéterminée située entre les potentiels disponibles aux points de référence, lequel circuit de réglage de tension est couplé à l'électrode de commande et à au moins un des fils (3, 4).

4. Système de télécommunications (1) suivant la revendication 3, caractérisé en ce que le circuit de réglage de tension comprend un diviseur de tension (17, 18) couplé entre les deux points de référence de tension fixe (7, 8), diviseur de tension (17, 18) dont une sortie est couplée à un côté du circuit de tension de seuil (15) et couplée à au moins l'un des deux fils au moyen d'une résistance à haute valeur ohmique (20, 21), résistance à haute valeur ohmique dont la valeur dépasse l'impédance caractéristique de la ligne de télécommunications, le côté étant couplé au premier point de référence de tension fixe (7) au moyen d'une autre résistance.

5. Système de télécommunications (1) suivant la revendication 4, caractérisé en ce que la résistance à haute valeur ohmique est couplée à l'un des points de référence au moyen d'un condensateur de lissage (22).

6. Circuit d'alimentation pour une ligne de télécommunications à deux fils (3, 4), le circuit d'alimentation comprenant une section de circuit (5) couplée entre un premier point de référence de tension fixe (7) relié à une alimentation de système et une borne pour la connexion du premier fil (3), et le circuit d'alimentation comprenant une source de courant (6) couplée entre une borne pour la connexion du deuxième fil (4) et un deuxième point de référence de tension fixe (8) relié à l'alimentation de système, la section de circuit (5) comprenant un transistor (11) couplé avec une première électrode principale à la borne pour la connexion du premier fil (3), couplé avec une deuxième électrode principale au premier point de référence de tension fixe (7) et couplé avec une électrode de commande à un des points de référence de tension fixe (7, 8) et, au moyen d'un condensateur (12), à la borne pour la connexion du premier fil (3), caractérisé en ce que la section de circuit (5) comprend un circuit de tension de seuil (15) agencé pour être conducteur dans une première direction lors de l'apparition d'une première tension de seuil pour rendre le transistor (11) conducteur, lequel circuit de tension de seuil (15) se trouve entre l'électrode de commande et le premier point de référence de tension fixe (7).

7. Circuit d'alimentation suivant la revendication 6, caractérisé en ce que le circuit de tension de seuil est en outre agencé pour être conducteur dans une deuxième direction lors de l'apparition d'une deuxième tension de seuil.

8. Circuit d'alimentation suivant la revendication 7, caractérisé en ce que le circuit d'alimentation comprend un circuit de réglage de tension (17,......,22) pour régler des tensions au niveau de bornes pour la connexion d'une ligne de télécommunications à une valeur prédéterminée située entre la tension au premier point de référence de tension fixe (7, 8), et la tension au deuxième point de référence de tension fixe, ce circuit de réglage de tension étant couplé à l'électrode de commande et pouvant être couplé à au moins l'un des deux fils.

9. Circuit d'alimentation suivant la revendication 8, caractérisé en ce que le circuit de réglage de tension comprend un diviseur de tension (17, 18) situé entre le premier point de référence de tension fixe et le deuxième point de référence de tension fixe, diviseur de tension dont une sortie est couplée à un côté du circuit de tension de seuil et peut être couplée à au moins l'un des deux fils au moyen d'une résistance à haute valeur ohmique (20, 21), résistance à haute valeur ohmique dont la valeur dépasse l'impédance caractéristique de la ligne de télécommunications, le côté étant couplé au premier point de référence de tension fixe (7) au moyen d'une autre résistance (16).

10. Circuit d'alimentation suivant la revendication 9, caractérisé en ce que la résistance à haute valeur ohmique est couplée au premier point de référence de tension fixe ou au deuxième point de référence de tension fixe au moyen d'un condensateur de lissage.
